# EUROPEAN PATENT SPECIFICATION

(11) **EP 3 109 092 B1**
(45) Date of publication and mention of the grant of the patent: **30.10.2019**
(21) Application number: 16172612.0
(22) Date of filing: 02.06.2016
(51) Int. Cl.: B60N 2/00, B60R 21/015, H01H 3/14, B60N 2/02

(54) **SEAT OCCUPANCY DETECTION DEVICE**
VORRICHTUNG ZUR SITZBELEGUNGSERKENNUNG
DISPOSITIF DE DÉTECTION DE L'OCCUPATION D'UN SIÈGE

(30) Priority: 04.06.2015 JP 2015114286
(43) Date of publication of application: 28.12.2016
(73) Proprietor: AISIN SEIKI KABUSHIKI KAISHA, Kariya-shi, Aichi 448-8650 (JP)
(72) Inventor: YANAI, Keiichi, Kariya-shi,, Aichi 448-8650 (JP); AOKI, Kento, Kariya-shi,, Aichi 448-8650 (JP)
(74) Representative: TBK

(56) References cited:
- EP-A1- 1 510 802
- EP-A1- 1 626 423
- EP-A1- 2 437 275
- WO-A1-2015/002320

## Description

### TECHNICAL FIELD

This disclosure relates to a seat occupancy detection device.

### BACKGROUND DISCUSSION

In the related art, there has been a seat occupancy detection device that determines a seat occupancy state on a seat cushion, based on an ON/OFF state of a membrane switch disposed on the inner side of seat upholstery constituting a seat occupancy surface of the seat cushion.

For example, in JP 2005-212496A (Reference 1), the seat occupancy detection device described above is configured to have four pressure-sensitive switch units provided in the membrane switch such that the pressure-sensitive switch units form separate detection regions, respectively. Specifically, the detection-sensitive switch portions are arranged such that a seat occupancy detection section set on the seat occupancy surface of the seat cushion is divided (demarcated) into the four detection regions formed by the pressure-sensitive switch units, respectively, in a frontward-rearward direction and in a width direction of the seat. Then, in a case where the pressure-sensitive switch units arranged in two detection regions, respectively, which are adjacent in the width direction of the seat, simultaneously enter a conduction state, or in a case where the pressure-sensitive switch units arranged in the two diagonally adjacent detection regions, respectively, enter a conduction state simultaneously, the seat occupancy detection device has a configuration in which the membrane switch enters an ON state.

In other words, a load distribution on a seat, which is obtained when an occupant is seated, is likely to be spread in the width direction of the seat corresponding to a hip region as a seat occupancy site. Based on this, the membrane switch as an example of the related art described above has a configuration in which a pressure-sensitive switch unit disposed on the leftward side in the seat occupancy detection section and a pressure-sensitive switch unit disposed on the rightward side in the seat occupancy detection section turn on in a case where both the pressure-sensitive switch units simultaneously enter the conduction state. In this manner, in the configuration, the occurrence of erroneous detection due to a loading item placed on the seat occupancy surface is avoided.

However, such a load distribution on the seat is changed by inclination of the occupant's body when a vehicle turns or the like. Then, in the seat occupancy detection device in the related art described above, the membrane switch enters an OFF state in such a case, and thereby there is a possibility that an error in the occupant detection determination occurs. In this respect, there is room for further improvement.

Further prior art is found in document EP 2 437 275 A1 disclosing a seat occupancy sensor as well as in document WO 2015/002320 A1 disclosing a membrane and a seat device.

### SUMMARY

Thus, a need exists for a seat occupancy detection device which can perform occupant detection determination with higher accuracy.

The seat occupancy detection device according to the invention comprises the features of claim 1.

It is preferable that a seat occupancy detection device according to an aspect of this disclosure includes: a membrane switch that forms a seat occupancy detection section on a seat occupancy surface of a seat cushion; and a seat occupancy determination device that determines a seat occupancy state of an occupant with respect to the seat cushion, based on an ON/OFF state of the membrane switch, in which a plurality of detection regions are set on the seat occupancy detection section by dividing the seat occupancy detection section in a frontward-rearward direction and in a width direction of a seat, and the membrane switch is configured to enter an ON state in a case where pressure-sensitive switch units arranged in two detection regions, respectively, which are adjacent in the frontward-rearward direction of the seat, simultaneously enter a conduction state.

That is, a load distribution on the seat, which is obtained when an occupant is seated, is also spread in the frontward-rearward direction of the seat corresponding to a femoral region continuous to the hip region. In particular, such a load distribution on the seat in the frontward-rearward direction of the seat occurs more remarkably by the occupant's body being inclined to the left or right. Hence, in this configuration, it is possible to avoid the occurrence of erroneous detection due to a loading item or the like placed on the seat occupancy surface, and it is possible to perform occupant detection determination with higher accuracy even in a state in which the occupant's seating posture is likely to be changed when a vehicle runs or the like.

In the seat occupancy detection device, it is preferable that the membrane switch includes a first film and a second film which are laminated with an intermediate film interposed therebetween, a first circuit pattern and a second circuit pattern which are formed on the first film, and a third circuit pattern which is formed on the second film, the respective pressure-sensitive switch units have a configuration in which respective contact portions of the first circuit pattern and the second circuit pattern face respective contact portions of the third circuit pattern via a communication portion provided in the intermediate film, and the pressure-sensitive switch unit formed by the contact portion of the first circuit pattern is disposed on one of the two detection regions adjacent in the frontward-rearward direction of the seat, and the pressure-sensitive switch unit formed by the contact portion of the second circuit pattern is disposed on the other detection region.

In this configuration, it is possible to configure the membrane switch so as to enter the ON state in the case where the pressure-sensitive switch units arranged in the two detection regions, respectively, which are adjacent in the frontward-rearward direction of the seat, simultaneously enter the conduction state.

In the seat occupancy detection device, it is preferable that the membrane switch has a configuration in which the pressure-sensitive switch unit formed by the contact portion of the first circuit pattern is disposed on one of the two detection regions adjacent in the width direction of the seat, and the pressure-sensitive switch unit formed by the contact portion of the second circuit pattern is disposed on the other detection region.

In this configuration, it is possible to configure the membrane switch so as to enter the ON state in the case where the pressure-sensitive switch units arranged in the two detection regions, respectively, which are adjacent in the width direction of the seat, simultaneously enter the conduction state.

In the seat occupancy detection device, it is preferable that each of the first circuit pattern and the second circuit pattern has a trunk wiring portion extending in a first direction and a first branched wiring portion and a second branched wiring portion which diverge from the trunk wiring portion and extend in directions opposite to each other. The contact portion is formed in each of the first branched wiring portions and each of the second branched wiring portions. The respective second branched wiring portions of the first circuit pattern and the second circuit pattern are provided to extend in the same direction as that of the respective first branched wiring portions on the other side, and detour wiring portions, which make a detour around the second branched wiring portions that diverge from the trunk wiring portions on the other side, are provided in the trunk wiring portions of the first circuit pattern and the second circuit pattern, respectively.

In this configuration, it is possible to form the first circuit pattern and the second circuit pattern such that the membrane switch enters the ON state in the case where the pressure-sensitive switch units arranged in the two detection regions, respectively, which are adjacent in the frontward-rearward direction of the seat, simultaneously enter the conduction state. In addition, it is possible to form the first circuit pattern and the second circuit pattern such that the membrane switch enters the ON state even in the case where the pressure-sensitive switch units arranged in the two detection regions, respectively, which are adjacent in the width direction of the seat, simultaneously enter the conduction state. Further, it is possible to form the first circuit pattern and the second circuit pattern on the first film in the minimum laying-out area without overlapping of the patterns. In this manner, it is possible to achieve improvement of production efficiency.

Additionally, it is possible for the first circuit pattern and the second circuit pattern to extend in an extending direction of the trunk wiring portion, with the first branched wiring portion, the second branched wiring portion, and the detour wiring portion as a repeating unit. In this manner, it is possible to easily divide the seat occupancy detection section formed on the seat occupancy surface into more detection regions.

In the seat occupancy detection device, it is preferable that a plurality of the contact portions are provided in at least one of the first branched wiring portion or the second branched wiring portion.

In this configuration, it is possible to arrange a plurality of pressure-sensitive switch units in the same detection region. As a result, it is possible to configure the membrane switch such that at least one of the plurality of pressure-sensitive switch units arranged in each of the detection regions enters the conduction state, based on a seat load applied to each of the detection region. In this manner, it is possible to perform occupant detection determination with higher accuracy.

In the seat occupancy detection device, it is preferable that the third circuit pattern has a configuration in which a pair of the contact portions are arranged with respect to the two detection regions adjacent in the frontward-rearward direction of the seat.

In the seat occupancy detection device, it is preferable that the third circuit pattern has a configuration in which a pair of the contact portions are arranged with respect to the two detection regions adjacent in the width direction of the seat.

In the seat occupancy detection device, it is preferable that the third circuit pattern has a plurality of second-direction wiring portions that extend in a second direction intersecting the first direction, and a connection wiring portion that connects the second-direction wiring portions, and the contact portions of the third circuit pattern are formed in the second-direction wiring portion, thereby facing the contact portions of the first circuit pattern or the contact portions of the second circuit pattern.

In the seat occupancy detection device, it is preferable that a plurality of the separate third circuit patterns, in which a pair of the contact portions are formed with respect to the two detection regions adjacent in the frontward-rearward direction of the seat, are arranged on the second film.

In the seat occupancy detection device, it is preferable that the membrane switch is configured to enter the ON state in the case where the pressure-sensitive switch units arranged in the two detection regions, respectively, which are adjacent in the width direction of the seat, simultaneously enter the conduction state.

In this configuration, it is possible to perform occupant detection determination with higher accuracy based on the load distribution on the seat, which is spread in the width direction of the seat corresponding to the hip region of the occupant, which is a seat occupancy site.

In the seat occupancy detection device, it is preferable that the membrane switch has the plurality of pressure-sensitive switch units configured to be arranged in the same detection region and at least one of the pressure-sensitive switch units enters the conduction state, based on the seat load applied to the detection region.

In this configuration, it is possible to perform occupant detection determination with higher accuracy.

According to the aspect of this disclosure, it is possible to perform occupant detection determination with higher accuracy.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating a schematic configuration of a seat occupancy detection device provided in a vehicle seat;
Fig. 2 is a sectional view of a membrane switch;
Fig. 3 is a circuit diagram of the membrane switch;
Fig. 4A is a circuit pattern diagram illustrating a first circuit pattern and a second circuit pattern which are formed on a first film constituting the membrane switch, and Fig. 4B is a circuit pattern diagram illustrating a third circuit pattern which is formed on a second film;
Fig. 5A is a circuit pattern diagram illustrating another example of the first circuit pattern and the second circuit pattern which are formed on the first film constituting the membrane switch, and Fig. 5B is a circuit pattern diagram illustrating another example of the third circuit pattern which is formed on the second film;
Fig. 6A is a circuit pattern diagram illustrating still another example of the first circuit pattern and the second circuit pattern which are formed on the first film constituting the membrane switch, and Fig. 6B is a circuit pattern diagram illustrating still another example of the third circuit pattern which is formed on the second film;
Fig. 7A is a circuit pattern diagram illustrating still another example of the first circuit pattern and the second circuit pattern which are formed on the first film constituting the membrane switch, and Fig. 7B is a circuit pattern diagram illustrating still another example of the third circuit pattern which is formed on the second film;
Fig. 8 is a circuit pattern diagram illustrating still another example of the first circuit pattern and the second circuit pattern which are formed on the first film constituting the membrane switch;
Figs. 9A to 9D are circuit pattern diagrams illustrating the other examples of the third circuit pattern which is formed on the second film constituting the membrane switch;
Fig. 10 is a circuit pattern diagram illustrating still another example of the third circuit pattern which is formed on the second film constituting the membrane switch; and
Fig. 11 is a circuit pattern diagram illustrating still another example of the first circuit pattern and the second circuit pattern which are formed on the first film constituting the membrane switch.

### DETAILED DESCRIPTION

Hereinafter, an embodiment according to a seat occupancy detection device provided in a vehicle seat will be described with reference to the drawings.

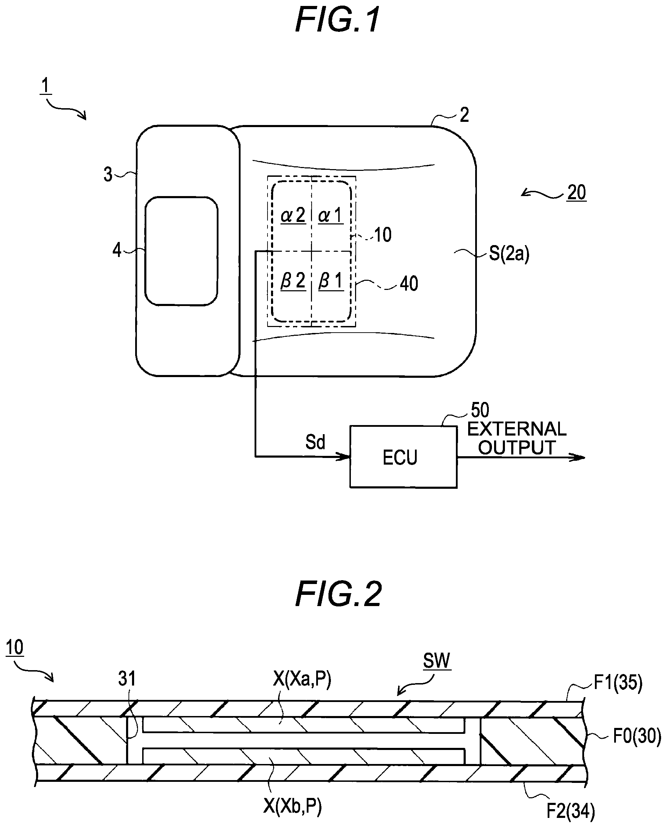

As illustrated in Fig. 1, a vehicle seat 1 includes a seat cushion 2 and seatback 3 provided in a rear end section of the seat cushion 2. Further, headrest 4 is provided on the upper end of the seatback 3. In addition, a membrane switch 10, which switches between ON/OFF states based on a seat load, is provided on the inner side of seat upholstery 2a constituting a seat occupancy surface S of the seat cushion 2. Then, in the present embodiment, the membrane switch 10 is used as a pressure-sensitive seat occupancy sensor, and thereby a seat occupancy detection device 20 that detects a seat occupancy state of an occupant on the seat cushion 2 is formed.

To be exact, as illustrated in Fig. 2, the membrane switch 10 of the present embodiment has a known configuration in which a first film F1 and a second film F2 are laminated (bonded) with an intermediate film F0 as a spacer 30 interposed therebetween. Specifically, circuit patterns P, which have contact portions X (Xa and Xb) facing via a communication portion (through-hole) 31 formed in the intermediate film F0, are formed on the first film F1 and the second film F2, respectively. Further, the circuit patterns P are formed, for example, by printing or the like using conductive ink. In addition, in a state in which the membrane switch 10 of the present embodiment is disposed on the inner side of the seat upholstery 2a, the second film F2 constitutes a lower film 34, and the first film F1 constitutes an upper film 35. Then, in this configuration, the first film F1 is elastically deformed based on a seat load applied to the seat occupancy surface S of the seat cushion 2 and is bent downward, and thereby an upper contact portion Xa formed in the first film F1 comes into contact with a lower contact portion Xb formed in the second film F2.

In other words, in the membrane switch 10 of the present embodiment, the pressure-sensitive switch unit (cell) SW is configured of the upper contact portion Xa of the first film F1 and the lower contact portion Xb of the second film F2 which are disposed to face each other in a vertical direction. Then, in this configuration, the ON/OFF states are switched based on a conduction state of the pressure-sensitive switch unit SW.

To be more exact, as illustrated in Fig. 1, in the seat occupancy detection device 20 of the present embodiment, a plurality of (four) detection regions (α1, α2, β1, and β2) are set in a seat occupancy detection section 40 formed by the membrane switch 10 on the seat occupancy surface S of the seat cushion 2 by dividing (demarcating) the seat occupancy detection section 40 in a forward-rearward direction and in a width direction of the seat. In addition, in the membrane switch 10 of the present embodiment, a plurality of pressure-sensitive switch units SW arranged in the detection regions, respectively, are provided. Then, the membrane switch 10 of the present embodiment is configured to switch between the ON/OFF states, based on combinations of conduction states of the respective pressure-sensitive switch units SW.

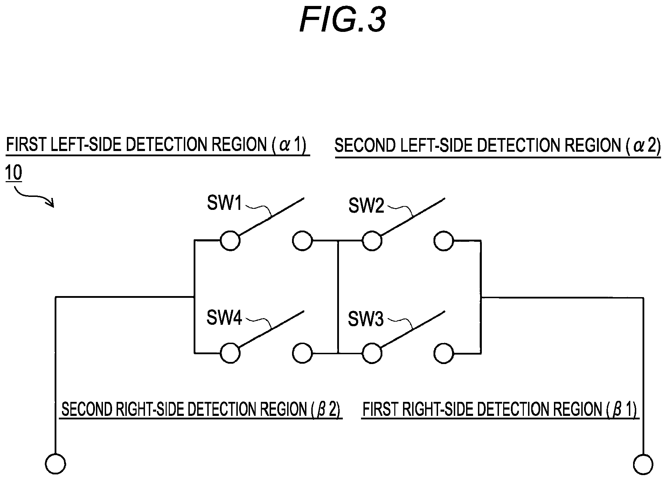

Specifically, as illustrated in Fig. 3, the membrane switch 10 of the present embodiment enters the ON state when a pressure-sensitive switch unit SW1 disposed in a first left-side detection region α1 enters the conduction state and a pressure-sensitive switch unit SW2 disposed in a second left-side detection region α2 enters the conduction state. Then, the membrane switch 10 is configured to enter the ON state, also in a case where a pressure-sensitive switch unit SW3 disposed in a first right-side detection region β1 enters the conduction state and a pressure-sensitive switch unit SW4 disposed in a second right-side detection region β2 enters the conduction state.

In addition, the membrane switch 10 enters the ON state when the pressure-sensitive switch unit SW1 disposed in a first left-side detection region α1 enters the conduction state and the pressure-sensitive switch unit SW3 disposed in the first right-side detection region β1 enters the conduction state. Then, the membrane switch 10 is configured to enter the ON state, also in a case where the pressure-sensitive switch unit SW2 disposed in the second left-side detection region α2 enters the conduction state and the pressure-sensitive switch unit SW4 disposed in the second right-side detection region β2 enters the conduction state.

In other words, the membrane switch 10 of the present embodiment is configured to enter the ON state in the case where the pressure-sensitive switch units SW (SW1 and SW2, or SW3 and SW4) disposed in two detection regions (α1 and α2, or β1 and β2), respectively, which are adjacent in the frontward-rearward direction of the seat, simultaneously enter the conduction state. Then, the membrane switch 10 is configured to enter the ON state in the case where the pressure-sensitive switch units SW (SW1 and SW3, or SW2 and SW4) disposed in two detection regions (α1 and β1, or α2 and β2), respectively, which are adjacent in the width direction of the seat, simultaneously enter the conduction state.

As illustrated in Fig. 1, in the seat occupancy detection device 20 of the present embodiment, a seat occupancy detection signal Sd indicating the ON/OFF states of the membrane switch 10 is input to an ECU 50. Then the seat occupancy detection device 20 of the present embodiment has a configuration in which the ECU 50 as the seat occupancy determination device determines that an occupant on the seat cushion 2 is in a seating state, in a case where the seat occupancy detection signal Sd indicates the ON state of the membrane switch 10.

### Circuit Pattern of Membrane Switch

Next, the respective circuit patterns P formed on the first film F1 and the second film F2, which constitute the membrane switch 10 of the present embodiment, will be described. Further, all circuit pattern diagrams of the membrane switch, which will be described below, are viewed from above in a state in which the first film F1 and the second film F2 are laminated.

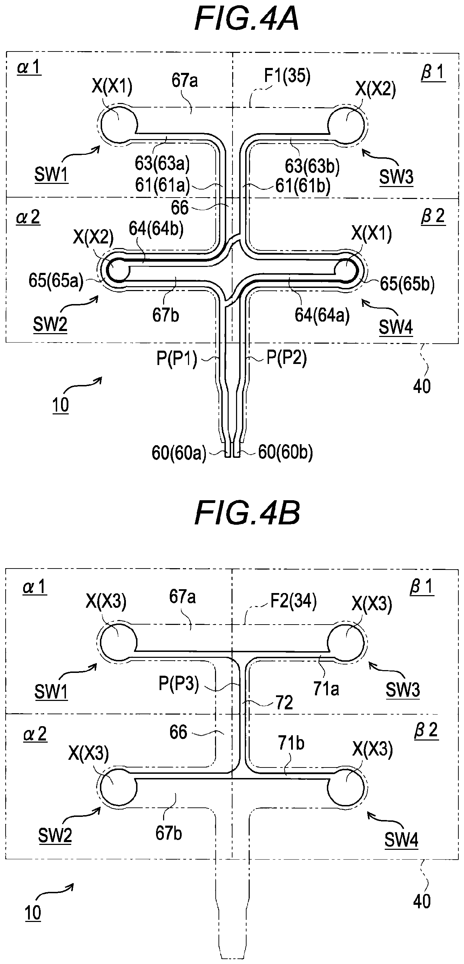

As illustrated in Figs. 4A and 4B, in the membrane switch 10 of the present embodiment, a first circuit pattern P1 and a second circuit pattern P2, which have connection terminals 60 (60a and 60b) on one end of the circuit patterns, are formed on the first film F1 constituting the upper film 35. In addition, a third circuit pattern P3, which has a contact portion X (X3) facing contact portions X (X1 and X2) formed in the first circuit pattern P1 and the second circuit pattern P2, is formed on the second film F2 constituting the lower film 34. Then, the membrane switch 10 of the present embodiment is configured to be connected to the ECU 50 constituting a seat occupancy determination device, with a first connection terminal 60a provided on one end of the first circuit pattern P1 and a second connection terminal 60b provided on one end of the second circuit pattern P2 as connection portions.

In other words, in the membrane switch 10, in a state in which the contact portion X1 of the first circuit pattern P1 and the contact portion X2 of the second circuit pattern P2 simultaneously come into contact with the contact portion X3 of the third circuit pattern P3, the first circuit pattern P1 and the second circuit pattern P2 are electrically connected via the third circuit pattern P3. In this configuration, the membrane switch enters the ON state that indicates a seating state of the occupant on the seat cushion 2.

To be exact, as illustrated in Fig. 4A, in the membrane switch 10 of the present embodiment, the first circuit pattern P1 and the second circuit pattern P2 have trunk wiring portions 61 (61a and 61b), respectively, which extend in the frontward-rearward direction of the seat (vertical direction in Figs. 4A and 4B). Then, the first circuit pattern P1 and the second circuit pattern P2 further have first branched wiring portions 63 (63a and 63b), respectively, and second branched wiring portions 64 (64a and 64b), respectively, which diverge from the trunk wiring portion 61 and extend in directions opposite to each other.

Specifically, in the first circuit pattern P1 and the second circuit pattern P2 in Fig. 4A, in a positional relationship in which the trunk wiring portion 61a of the first circuit pattern P1 is positioned on the left side and the trunk wiring portion 61b of the second circuit pattern P2 is positioned on the right side, the trunk wiring portions 61a and 61b are arranged substantially in parallel to extend in the frontward-rearward direction of the seat. In addition, the first circuit pattern P1 has the first branched wiring portion 63a which diverges from an end portion (end portion on the upper side in Fig. 4A) of the trunk wiring portion 61a on the front side of the seat and which extends to the left side in Fig. 4A. The second circuit pattern P2 has the first branched wiring portion 63b which diverges from an end portion of the trunk wiring portion 61b on the front side of the seat and which extends to the right side in Fig. 4A. Further, the first circuit pattern P1 has the second branched wiring portion 64a which diverges from a position (lower side in Fig. 4A) on the rear side of the seat from the first branched wiring portion 63a and which extends to the right side in Fig. 4A. Similarly, the second circuit pattern P2 has the second branched wiring portion 64b which diverges from a position on the rear side of the seat from the first branched wiring portion 63b and which extends to the left side in Fig. 4A. Furthermore, the contact portions X (X1 and X2) of the first circuit pattern P1 and the second circuit pattern P2 are provided in front end portions of the first branched wiring portion 63 and the second branched wiring portion 64. Then, the connection terminals 60 (60a and 60b) of the membrane switch 10 are provided on end portions (end portion on the lower side in Fig. 4A) on the rear side of the seat of the respective trunk wiring portions 61 (61a and 61b) of the first circuit pattern P1 and the second circuit pattern P2.

In addition, in the membrane switch 10 of the present embodiment, the trunk wiring portions 61 (61a and 61b) of the first circuit pattern P1 and the second circuit pattern P2 have detour wiring portions 65 (65a and 65b), respectively, which make a detour around the second branched wiring portions 64 (64a and 64b) that diverge from the trunk wiring portions 61 (61a and 61b) on the other side. Specifically, the first circuit pattern P1 has a substantially U-shaped detour wiring portion 65a, which projects to the left side in Fig. 4A, on the trunk wiring portion 61a, and the second branched wiring portion 64b of the second circuit pattern P2 is provided to extend to the left side in Fig. 4A, on the inner side of the substantially U-shaped detour wiring portion 65a. Similarly, the second circuit pattern P2 has a substantially U-shaped detour wiring portion 65b, which projects to the right side in Fig. 4A, on the trunk wiring portion 61b, and the second branched wiring portion 64a of the first circuit pattern P1 is provided to extend to the right side in Fig. 4A, on the inner side of the substantially U-shaped detour wiring portion 65b. Then, in the membrane switch 10 of the present embodiment, a configuration in which the first circuit pattern P1 and the second circuit pattern P2 are configured not to be overlapped on the first film F1.

Further, the respective detour wiring portions 65 (65a and 65b) of the first circuit pattern P1 and the second circuit pattern P2 are formed substantially at the same position in an extending direction of the trunk wiring portions 61 (61a and 61b). Then, the first film F1 of the present embodiment has an external shape formed to follow an outline of a substantial lattice shape which is formed of the first circuit pattern P1 and the second circuit pattern P2.

Specifically, the first film F1 of the present embodiment has a first-direction extending portion 66 extending in the frontward-rearward direction of the seat and a pair of second-direction extending portions 67a and 67b which intersect the first-direction extending portion 66 and extend substantially in parallel. In other words, in the membrane switch 10 of the present embodiment, the respective trunk wiring portions 61 (61a and 61b) of the first circuit pattern P1 and the second circuit pattern P2 are formed on the first-direction extending portion 66 in the first film F1. In addition, the respective first branched wiring portions 63 (63a and 63b) are formed on the second-direction extending portion 67a in the first film F1 on the front side of the seat. Then, the respective second branched wiring portions 64 (64a and 64b) and the respective detour wiring portions 65 (65a and 65b) are formed on the second-direction extending portion 67b in the first film F1 on the rear side of the seat.

Meanwhile, as illustrated in Fig. 4B, the third circuit pattern P3 of the present embodiment has a pair of second-direction wiring portions 71a and 71b extending in the width direction of the seat, and a connection wiring portion 72 that connects the second-direction wiring portions 71a and 71b. In addition, the second film F2 of the present embodiment has substantially the same external shape as the first film F1 described above, which has the first-direction extending portion 66 and the second-direction extending portions 67a and 67b as described above (refer to Fig. 4A). In other words, in the membrane switch 10 of the present embodiment, the second-direction wiring portions 71a and 71b of the third circuit pattern P3 are formed on the second-direction extending portions 67a and 67b of the second film F2, respectively. Then, the connection wiring portion 72 of the third circuit pattern P3 is formed on the first-direction extending portion 66 in the second film F2.

In addition, the contact portions X3 of the third circuit pattern P3 are formed on both end portions of the respective second-direction wiring portions 71a and 71b. In this manner, in the membrane switch 10 of the present embodiment, the contact portions X3 of the third circuit pattern P3 are arranged at positions facing the contact portions X1 of the first circuit pattern P1 or the contact portions X2 of the second circuit pattern P2, respectively.

As illustrated in Figs. 4A and 4B, the membrane switch 10 of the present embodiment has a configuration in which the contact portions X1 that are set in the first branched wiring portion 63a and the second branched wiring portion 64a of the first circuit pattern P1 are arranged in the first left-side detection region α1 and the second right-side detection region β2 that are set in the seat occupancy detection section 40, respectively, on the seat occupancy surface S of the seat cushion 2 described above. In addition, the contact portions X2 that are set in the first branched wiring portion 63b and the second branched wiring portion 64b of the second circuit pattern P2 are arranged in the first right-side detection region β1 and the second left-side detection region α2 that are set in the seat occupancy detection section 40, respectively. Further, in the third circuit pattern P3 has a configuration in which a pair of the contact portions X3 are arranged with respect to the two detection regions that are adjacent in the frontward-rearward direction of the seat, and a pair of the contact portions X3 are also arranged with respect to the two detection regions that are adjacent in the width direction of the seat. Then, the membrane switch 10 of the present embodiment has a configuration in which the pressure-sensitive switch units SW (SW1 to SW4) which are formed of the contact portions X (X1, X2, and X3) of the circuit patterns P (P1 to P3) are arranged with respect to the detection regions (α1, α2, β1, and β2).

In other words, the membrane switch 10 has a configuration in which the pressure-sensitive switch units SW1 and SW4, which are formed of the contact portions X1 of the first circuit pattern P1, are arranged in one of the two detection regions (α1 and α2, or β1 and β2) which are adjacent in the frontward-rearward direction of the seat, and the pressure-sensitive switch units SW2 and SW3, which are formed of the contact portions X2 of the second circuit pattern P2, are arranged in the other detection region. Further, the membrane switch 10 has a configuration in which the pressure-sensitive switch units SW1 and SW4, which are formed of the contact portions X1 of the first circuit pattern P1, are also arranged in one of the two detection regions (α1 and β1, or α2 and β2) that are adjacent in the width direction of the seat, and the pressure-sensitive switch units SW2 and SW3, which are formed of the contact portions X2 of the second circuit pattern P2, are arranged in the other detection region. In this manner, the membrane switch 10 of the present embodiment is configured to enter the ON state in the case where the pressure-sensitive switch units arranged in the two detection regions, respectively, which are adjacent in the frontward-rearward direction or in the width direction of the seat, simultaneously enter the conduction state.

Specifically, in a case where a seat load is applied to the first left-side detection region α1 and the second left-side detection region α2 which are positioned on the left side of the seat occupancy detection section 40 in Figs. 4A and 4B, the contact portion X1 provided in the first branched wiring portion 63a of the first circuit pattern P1 comes into contact with the contact portion X3 of the third circuit pattern P3. At this time, the contact portion X2 provided in the second branched wiring portion 64b of the second circuit pattern P2 also comes into contact with the contact portion X3 of the third circuit pattern P3. In this manner, the membrane switch 10 of the present embodiment is configured to enter the ON state in the case where the pressure-sensitive switch units SW1 and SW2 arranged in the first left-side detection region α1 and the second left-side detection region α2, respectively, enter the conduction state simultaneously (refer to Fig. 3).

In addition, in a case where a seat load is applied to the first right-side detection region β1 and the second right-side detection region β2 which are positioned on the right side of the seat occupancy detection section 40 in Figs. 4A and 4B, the contact portion X1 provided in the first branched wiring portion 63b of the second circuit pattern P2 comes into contact with the contact portion X3 of the third circuit pattern P3. At this time, the contact portion X2 provided in the second branched wiring portion 64a of the first circuit pattern P1 also comes into contact with the contact portion X3 of the third circuit pattern P3. In this manner, the membrane switch 10 of the present embodiment is configured to enter the ON state in the case where the pressure-sensitive switch units SW3 and SW4 arranged in the first right-side detection region β1 and the second right-side detection region β2, respectively, enter the conduction state simultaneously.

Further, in a case where a seat load is applied to the first left-side detection region α1 and the first right-side detection region β1 which are positioned on the front side of the seat occupancy detection section 40 in Figs. 4A and 4B, the contact portions X1 provided in the first branched wiring portions 63a and 63b of the first circuit pattern P1 and the second circuit pattern P2 come into contact with the contact portions X3 of the third circuit pattern P3. In addition, in a case where a seat load is applied to the second left-side detection region α2 and the second right-side detection region β2 which are positioned on the rear side of the seat occupancy detection section 40 in Figs. 4A and 4B, the contact portions X1 provided in the second branched wiring portions 64a and 64b of the first circuit pattern P1 and the second circuit pattern P2 come into contact with the contact portions X3 of the third circuit pattern P3. In this manner, the membrane switch 10 of the present embodiment is configured to enter the ON state in the case where the pressure-sensitive switch units SW1 and SW3 in the first left-side detection region α1 and the first right-side detection region β1, respectively, enter the conduction state simultaneously or also in the case where the pressure-sensitive switch units SW2 and SW4 in the second left-side detection region α2 and the second right-side detection region β2, respectively, enter the conduction state simultaneously.

Hereinafter, according to the present embodiment, it is possible to achieve the following effects.
(1) The seat occupancy detection device 20 includes: the membrane switch 10 that forms the seat occupancy detection section 40 on the seat occupancy surface S of the seat cushion 2; and the ECU 50 as the seat occupancy determination device that determines the seat occupancy state of the occupant with respect to the seat cushion 2, based on the ON/OFF state of the membrane switch 10. In addition, a plurality of detection regions (α1, α2, β1, and β2) are set on the seat occupancy detection section 40 by dividing the seat occupancy detection section 40 in the frontward-rearward direction and in the width direction of a seat. Then, the membrane switch 10 is configured to enter the ON state in the case where the pressure-sensitive switch units SW (SW1 and SW2, or SW3 and SW4) in the two detection regions (α1 and α2, or β1 and β2), respectively, which are adjacent in the frontward-rearward direction of the seat, simultaneously enter the conduction state.
   In other words, a load distribution on the seat, which is obtained when an occupant is seated, is spread also in the frontward-rearward direction of the seat corresponding to a femoral region continuous to the hip region. In particular, such a load distribution on the seat in the frontward-rearward direction of the seat occurs more remarkably by the occupant's body inclined to the left or right. Hence, in this configuration, it is possible to avoid the occurrence of erroneous detection due to a loading item or the like placed on the seat occupancy surface S, and it is possible to perform occupant detection determination with higher accuracy even in a state in which the occupant's seating posture is likely to be changed when a vehicle runs or the like.
(2) The membrane switch 10 is configured to also enter the ON state in the case where the pressure-sensitive switch units SW (SW1 and SW3, or SW2 and SW4), in the two detection regions (α1 and β1, or α2 and β2), respectively, which are adjacent in the width direction of the seat, simultaneously enter the conduction state.
   In this configuration, it is possible to perform occupant detection determination with higher accuracy based on the load distribution on the seat, which is spread in the width direction of the seat corresponding to a femoral region continuous to the hip region.
(3) The membrane switch 10 includes the first film F1 and the second film F2 which are laminated with the intermediate film F0 as a spacer 30 interposed therebetween, the first circuit pattern P1 and the second circuit pattern P2 which are formed on the first film F1, and the third circuit pattern P3 which is formed on the second film F2. The respective pressure-sensitive switch units SW are formed such that the contact portions X1 of the first circuit pattern P1 and the contact portions X2 of the second circuit pattern P2 face the contact portions X3 of the third circuit pattern P3 via the communication portion 31 formed in the intermediate film F0. Then, the membrane switch 10 has a configuration in which the pressure-sensitive switch units SW1 and SW4 formed by the contact portions X1 of the first circuit pattern P1 are arranged on one of the two detection regions (α1 and α2, or β1 and β2), which are adjacent in the frontward-rearward direction of the seat, and the pressure-sensitive switch units SW2 and SW3 formed by the contact portions X2 of the second circuit pattern P2 are arranged on the other detection region.
   In this configuration, it is possible to configure the membrane switch 10 so as to enter the ON state in the case where the pressure-sensitive switch units SW arranged in the two detection regions, respectively, which are adjacent in the frontward-rearward direction of the seat, simultaneously enter the conduction state.
(4) The membrane switch 10 has a configuration in which the pressure-sensitive switch units SW1 and SW4 formed by the contact portions X1 of the first circuit pattern P1 are arranged on one of the two detection regions (α1 and β1, or α2 and β2), which are adjacent in the width direction of the seat, and the pressure-sensitive switch units SW2 and SW3 formed by the contact portions X2 of the second circuit pattern P2 are arranged on the other detection region.
   In this configuration, it is possible to configure the membrane switch 10 so as to enter the ON state in the case where the pressure-sensitive switch units SW arranged in the two detection regions, respectively, which are adjacent in the width direction of the seat, simultaneously enter the conduction state.
(5) The first circuit pattern P1 and the second circuit pattern P2 have trunk wiring portions 61 (61a and 61b) extending in the first direction and the first branched wiring portions 63 (63a and 63b) and the second branched wiring portions 64 (64a and 64b), respectively, which diverge from the trunk wiring portions 61a and 61b and extend in directions opposite to each other. Further, the contact portions X1 and X2 of the first circuit pattern P1 and the second circuit pattern P2 are formed in the first branched wiring portions 63a and 63b, respectively, and the second branched wiring portions 64a and 64b, respectively. The respective second branched wiring portions 64a and 64b of the first circuit pattern P1 and the second circuit pattern P2 are provided to extend in the same direction as that of the respective first branched wiring portions 63a and 63b on the other sides. Then, the detour wiring portions 65 (65a and 65b), which make a detour around the second branched wiring portions 64a and 64b that diverge from the trunk wiring portions 61a and 61b on the other side, are provided in the trunk wiring portions 61a and 61b of the first circuit pattern P1 and the second circuit pattern P2, respectively.
   In this configuration, it is possible to form the first circuit pattern P1 and the second circuit pattern P2 such that the membrane switch 10 enters the ON state in the case where the pressure-sensitive switch units SW arranged in the two detection regions, respectively, which are adjacent in the frontward-rearward direction of the seat, simultaneously enter the conduction state. In addition, it is possible to form the first circuit pattern P1 and the second circuit pattern P2 such that the membrane switch 10 enters the ON state also in the case where the pressure-sensitive switch units SW arranged in the two detection regions, respectively, which are adjacent in the width direction of the seat, simultaneously enter the conduction state. Further, it is possible to form the first circuit pattern P1 and the second circuit pattern P2 on the first film F1 in the minimum laying-out area without overlapping of the patterns. In this manner, it is possible to achieve improvement of production efficiency.
(6) The third circuit pattern P3 has the pair of second-direction wiring portions 71a and 71b extending in the width direction of the seat, and a connection wiring portion 72 that connects both the second-direction wiring portions 71a and 71b. Then, the contact portions X3 of the third circuit pattern P3 are formed in the respective second-direction wiring portions 71a and 71b, thereby being arranged at positions facing the contact portions X1 of the first circuit pattern P1 or the contact portions X2 of the second circuit pattern P2, respectively.

In this configuration, it is possible to form the third circuit pattern P3 on the second film F2 in the minimum laying-out area such that the membrane switch 10 enters the ON state in the case where the pressure-sensitive switch units SW arranged in the two detection regions, respectively, which are adjacent in the frontward-rearward direction or in the width direction of the seat, simultaneously enter the conduction state. In addition, the second film F2 can have substantially the same shape as the first film F1. In this manner, it is possible to achieve improvement of production efficiency.

Further, the embodiment described above may be modified as follows.
- In the embodiment described above, in the membrane switch 10, the first film F1 having the first circuit pattern P1 and the second circuit pattern P2 constitutes the upper film 35, and the second film F2 having the third circuit pattern P3 constitutes the lower film 34. However, the configuration is not limited thereto, and the first film F1 may constitute the lower film 34, and the second film F2 may constitute the upper film 35.
- In addition, the membrane switch 10 may be disposed under a cushion material, specifically between the seat upholstery 2a and the cushion material, as long as the membrane switch is disposed at a position at which ON/OFF operations are performed, based on the seat load applied to the seat upholstery 2a.
- In the embodiment described above, the frontward-rearward direction of the seat is referred to as the first direction, and the width direction of the seat, which is substantially orthogonal thereto, is referred to as the second direction. However, the definition of the directions is not limited thereto, the width direction of the seat may be referred to as the first direction, and the frontward-rearward direction of the seat may be referred to as the second direction. In addition, a direction inclined with respect to the frontward-rearward direction and to the width direction of the seat may be referred to as the first direction. Then, the second direction may not be necessarily orthogonal to the first direction as long as the second direction intersects the first direction.
- In the embodiment described above, the membrane switch 10 has the pressure-sensitive switch units SW (SW1 to SW4) disposed in the detection regions (α1, α2, β1, and β2), respectively, which are set by dividing the seat occupancy detection section 40 in the frontward-rearward direction and in the width direction of the seat. However, the configuration is not limited thereto, and a configuration, in which a plurality of pressure-sensitive switch units SW that are arranged in the same detection region and that enter the conduction state based on the seat load applied to the detection region, may be employed.

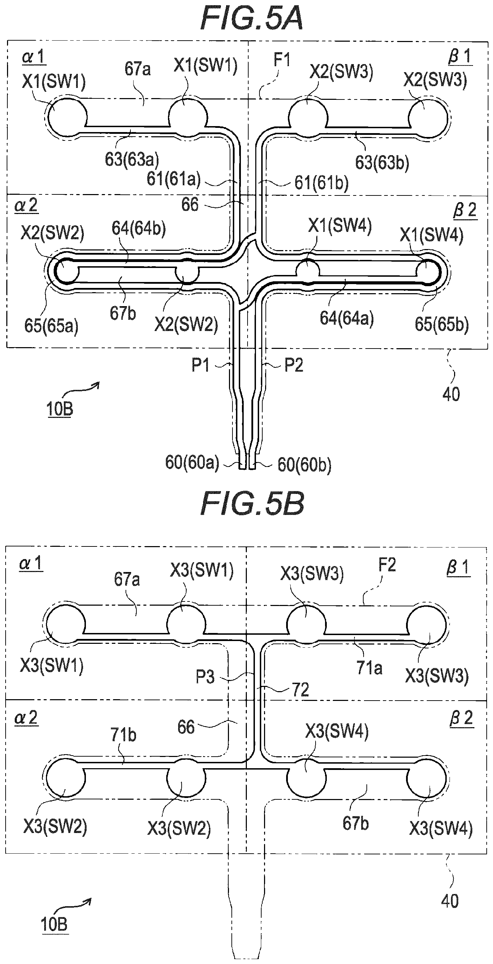

For example, as in a membrane switch 10B illustrated in Figs. 5A and 5B, the two contact portions X1 and two contact portions X2 are formed on base end sides of the first branched wiring portions 63 and the second branched wiring portions 64 of the first circuit pattern P1 and the second circuit pattern P2, respectively. Similarly, in the third circuit pattern P3, new contact portions X3 are added at positions facing the contact portions X1 and X2 on the base end sides, respectively, which are added in the first circuit pattern P1 and the second circuit pattern P2. Then, a configuration, in which the two contact portions X1 and two contact portions X2 formed in the first branched wiring portions 63 and the second branched wiring portions 64 of the first circuit pattern P1 and the second circuit pattern P2, respectively, are arranged in each branched wiring, in the detection regions (α1, α2, β1, and β2) of the seat occupancy detection section 40, respectively, may be employed.

In other words, the membrane switch has a configuration in which at least one of the two pressure-sensitive switch units SW arranged in the respective detection regions enters the conduction state based on the seat load applied to the respective detection regions (α1, α2, β1, and β2). In this manner, it is possible to perform occupant detection determination with higher accuracy.
- In addition, as in the membrane switch 10B illustrated in Figs. 5A and 5B, the two pressure-sensitive switch units SW (SW1 to SW4) are arranged in each of the detection regions (α1, α2, β1, and β2) of the seat occupancy detection section 40. However, the configuration is not limited thereto, and three or more pressure-sensitive switch units SW may be arranged in each of the detection regions. Further, a plurality of pressure-sensitive switch units SW may not be necessarily provided in each of all the detection regions. For example, a configuration, in which the plurality of pressure-sensitive switch units SW may be provided only in the detection regions (α1 and α2, or β1 and β2) on the left or right side in the width direction of the seat, may be employed. Then, a configuration, in which the plurality of pressure-sensitive switch units SW may be provided only in the detection regions (α1 and β1, or α2 and β2) in front or rear section of the seat, may be employed.
- In the embodiment described above, in the seat occupancy detection section 40 formed on the seat occupancy surface S, the four detection regions (α1, α2, β1, and β2) are set by dividing the seat occupancy detection section 40 in the frontward-rearward direction of the seat and in the width direction of the seat. However, the configuration is not limited thereto, and the seat occupancy detection section 40 may be divided into three or more portions in at least one of the frontward-rearward direction or in the width direction of the seat. Then, a configuration, in which the pressure-sensitive switch units SW of the membrane switch are arranged in the plurality of detection regions formed in this manner, respectively, may be employed.

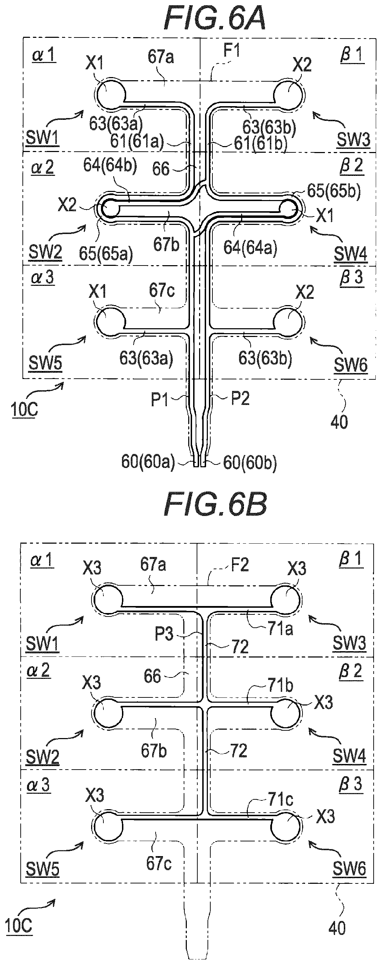

For example, a membrane switch 10C illustrated in Figs. 6A and 6B has the first film F1 and the second film F2 which have three second-direction extending portions 67a to 67c that extend by intersecting the first-direction extending portion 66. In addition, the first branched wiring portions 63 (63a and 63b) along the second-direction extending portion 67c disposed on the rearmost side are formed in the first circuit pattern P1 and the second circuit pattern P2 formed on the first film F1. Then, a second-direction wiring portion 71c having the contact portions X3 facing the contact portions X1 and X2 of the added first branched wiring portions 63 (63a and 63b) is formed in the third circuit pattern P3 formed on the second film F2, in a case of being compared to the membrane switch 10 in the first embodiment described above.

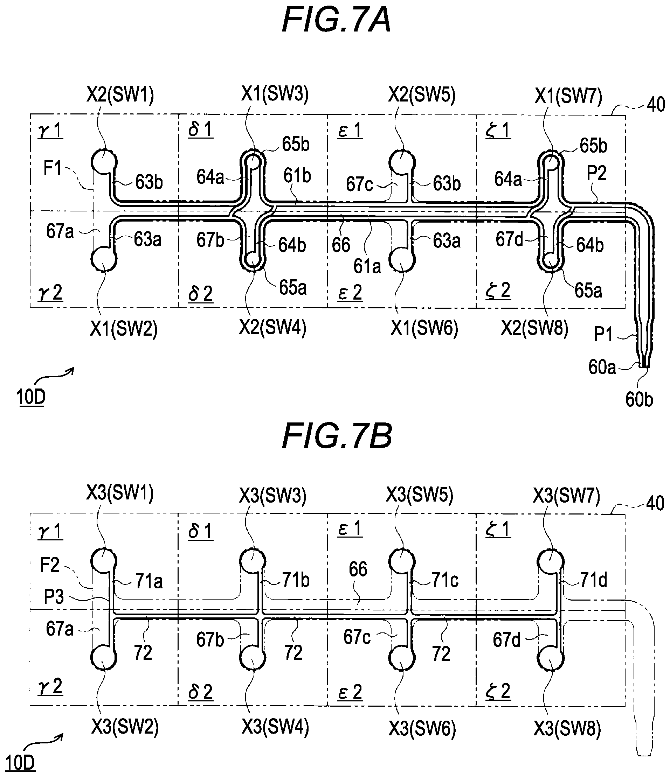

In other words, the seat occupancy detection section 40 formed on the seat occupancy surface S by a membrane switch 10C is divided into three portions in the frontward-rearward direction of the seat. In addition, the contact portions X1, X2, and X3 added in the first circuit pattern P1, the second circuit pattern P2, and the third circuit pattern P3, are arranged in a third left-side detection region α3 and a third right-side detection region β3, respectively, which are provided on the rearmost side of the seat occupancy detection section 40, thereby forming pressure-sensitive switch units SW5 and SW6. In this manner, the membrane switch 10C is configured to enter the ON state, even in a case where the pressure-sensitive switch units SW2 and SW5 disposed in the second left-side detection region α2 and the third left-side detection region α3, respectively, enter the conduction state simultaneously, or the pressure-sensitive switch units SW4 and SW6 disposed in the second right-side detection region β2 and the third right-side detection region β3, respectively, enter the conduction state simultaneously.
- In addition, as in a membrane switch 10D illustrated in Figs. 7A and 7B, the first circuit pattern P1 and the second circuit pattern P2 (and the third circuit pattern P3) may extend in an extending direction of the trunk wiring portions 61a and 61b, with the first branched wiring portions 63a and 63b, the second branched wiring portions 64a and 64b, and the detour wiring portions 65a and 65b as a repeating unit. Such a configuration is employed, thereby making it possible to divide the seat occupancy detection section 40 formed on the seat occupancy surface S into more detection regions. Further, as in the membrane switch 10C illustrated in Figs. 6A and 6B, in the configuration in which the first branched wiring portions 63 (63a and 63b) are added, it is possible to consider the configuration as a configuration in which repeating is performed "1.5 times". In this manner, it is also possible to accept odd-numbered divisions.

For example, the membrane switch 10D illustrated in Figs. 7A and 7B has the first film F1 and the second film F2 which have four second-direction extending portions 67a to 67d that extend by intersecting the first-direction extending portion 66. In addition, in the membrane switch 10D, the first circuit pattern P1 and the second circuit pattern P2 have the two first branched wiring portions 63 (63a and 63b), the two second branched wiring portions 64 (64a and 64b), and the two detour wiring portions 65 (65a and 65b) which are provided in a manner of repeating the repeating unit described above two times. Then, the third circuit pattern P3 has four second-direction wiring portions 71a to 71d corresponding to the first branched wiring portions 63, the second branched wiring portions 64, and the detour wiring portions 65.

In addition, the membrane switch 10D is disposed on the inner side of the seat upholstery 2a constituting the seat occupancy surface S in a manner in which the first-direction extending portion 66 is disposed in the width direction of the seat (rightward-leftward direction in Figs. 7A and 7B). In this manner, in a configuration of an example illustrated in Figs. 7A and 7B, the seat occupancy detection section 40 formed on the seat occupancy surface S is divided into two portions in the frontward-rearward direction and four portions in the width direction of the seat.

Specifically, in the membrane switch 10D, the contact portions X1 provided in the first branched wiring portions 63a of the first circuit pattern P1, respectively, are arranged in a first rear detection region γ2 and a third rear detection region ε2 which are set by dividing the seat occupancy detection section 40, and the contact portions X1 provided in the second branched wiring portions 64a, respectively, are arranged in a second front detection region δ1 and a fourth front detection region ζ1. In addition, the contact portions X2 provided in the first branched wiring portions 63b of the second circuit pattern P2, respectively, are arranged in a first front detection region γ1 and a third front detection region ε1, and the contact portions X2 provided in the second branched wiring portions 64b, respectively, are arranged in a second rear detection region δ2 and a fourth rear detection region ζ2. In this configuration, the respective contact portions X1 and X2 of the first circuit pattern P1 and the second circuit pattern P2 arranged in the respective detection regions of the seat occupancy detection section 40, and the respective contact portions X3 of the third circuit pattern P3 form the individual pressure-sensitive switch units SW (SW1 to SW8), respectively, for each of the detection regions.

In other words, in the membrane switch 10D, the pressure-sensitive switch units SW2, SW3, SW6, and SW7 formed by the contact portions X1 of the first circuit pattern P1 are arranged on one of the two detection regions which are adjacent in the frontward-rearward direction of the seat (vertical direction in Figs. 7A and 7B), and the pressure-sensitive switch units SW1, SW4, SW5, and SW8 formed by the contact portions X2 of the second circuit pattern P2 are arranged on the other detection region. Similarly in the two detection regions adjacent in the width direction of the seat (rightward-leftward direction in Figs. 7A and 7B), the pressure-sensitive switch units SW2, SW3, SW6, and SW7 formed by the contact portions X1 of the first circuit pattern P1 are arranged on one detection region, and the pressure-sensitive switch units SW1, SW4, SW5, and SW8 formed by the contact portions X2 of the second circuit pattern P2 are arranged on the other detection region. In this manner, the membrane switch 10D is configured to enter the ON state in the case where the pressure-sensitive switch units SW arranged in the two detection regions, respectively, which are adjacent in the frontward-rearward direction or in the width direction of the seat, simultaneously enter the conduction state.
- In addition, the shapes of the first circuit pattern P1 and the second circuit pattern P2 formed on the first film F1, and the shape of the third circuit pattern P3 formed on the second film F2 may be arbitrarily modified. However, in a case of considering simplification of the manufacturing processes, it is desirable that the first circuit pattern P1 and the second circuit pattern P2 are not overlapped on the first film F1. In a case of considering the production efficiency, it is desirable that the first circuit pattern P1 and the second circuit pattern P2 are formed in the minimum laying-out areas.

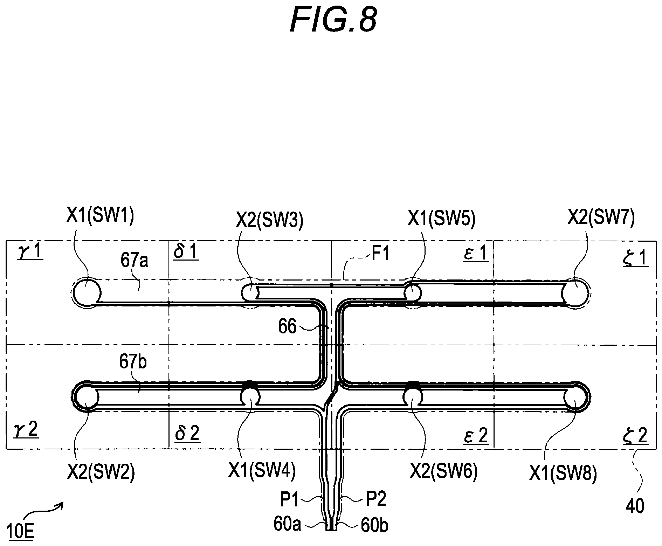

For example, as in a membrane switch 10E illustrated in Fig. 8, the first circuit pattern P1 and the second circuit pattern P2 may be formed on the first film F1. In this manner, it is possible to form the first circuit pattern P1 and the second circuit pattern P2 on the first film F1 in the minimum area without overlapping of the patterns.

Specifically, in the membrane switch 10E, the first circuit pattern P1 has a configuration in which the contact portions X1 are arranged in the first front detection region γ1, the second rear detection region δ2, the third front detection region ε1, and the fourth rear detection region ζ2 which are set on the seat occupancy detection section 40, respectively. Also, the second circuit pattern P2 has a configuration in which the contact portions X2 are arranged in the first rear detection region γ2, the second front detection region δ1, the third rear detection region ε2, and the fourth front detection region ζ1 which are set on the seat occupancy detection section 40, respectively. As the second film F2 and the third circuit pattern, the same second film and third circuit pattern in Fig. 5B described above may be used, and dimension thereof may be matched with the first circuit pattern P1 and the second circuit pattern P2 on the first film F1.

In other words, even when such configurations are employed, similar to the membrane switch 10D illustrated in Figs. 7A and 7B described above, the seat occupancy detection section 40 formed on the seat occupancy surface S is divided into two portions in the frontward-rearward direction and four portions in the width direction of the seat. In addition, the pressure-sensitive switch units SW1, SW4, SW5, and SW8 formed by the contact portions X1 of the first circuit pattern P1 are arranged on one of the two detection regions which are adjacent in the frontward-rearward direction or in the width direction of the seat (the vertical direction or the rightward-leftward direction in Fig. 8), and the pressure-sensitive switch units SW2, SW3, SW6, and SW7 formed by the contact portions X2 of the second circuit pattern P2 are arranged on the other detection region. In this manner, the membrane switch 10E can be configured to enter the ON state in the case where the pressure-sensitive switch units SW arranged in the two detection regions, respectively, which are adjacent in the frontward-rearward direction or in the width direction of the seat, simultaneously enter the conduction state.
- The membrane switch 10 of the embodiment described above, which is illustrated in Figs. 4A and 4B, or the other examples of the membrane switches 10B to 10E illustrated in Figs. 5A to 8 enter the ON state, in the case where the pressure-sensitive switch units SW arranged in the two detection regions, respectively, which are adjacent in the frontward-rearward direction or in the width direction of the seat, simultaneously enter the conduction state. However, the configuration is not limited thereto, and the membrane switch may be configured to enter the ON state, only in the case where the pressure-sensitive switch units SW arranged in the two detection regions, respectively, which are adjacent in the frontward-rearward direction of the seat, simultaneously enter the conduction state.

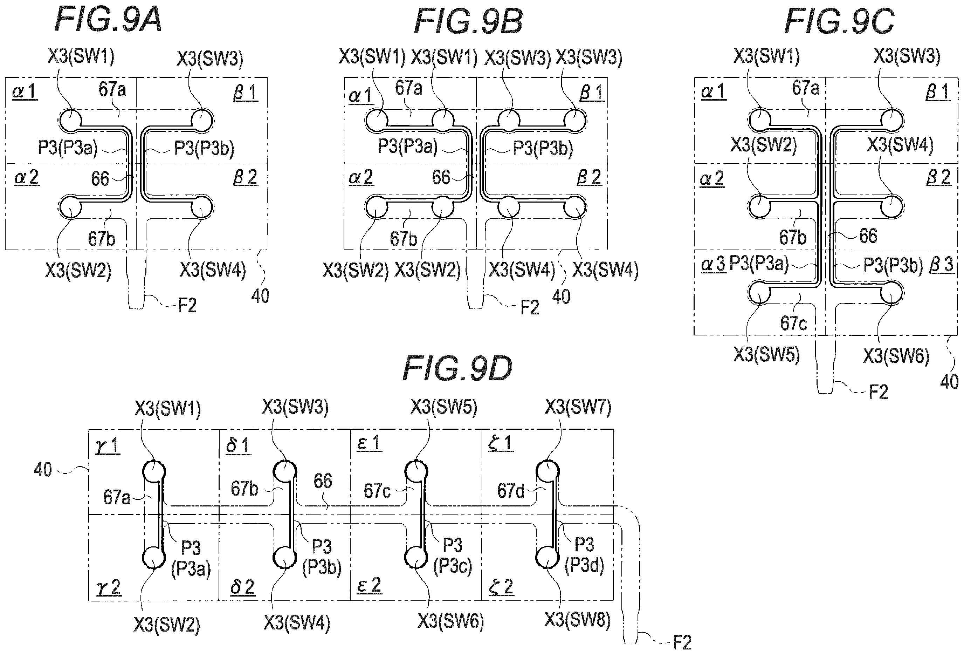

Specifically, as illustrated in Figs. 9A to 9D, a plurality of the separate third circuit patterns P3 may be formed on the second film F2 such that a pair of the contact portions X3 are arranged with respect to the two detection regions adjacent in the frontward-rearward direction of the seat.

In other words, in the membrane switch 10 having the first circuit pattern P1 and the second circuit pattern P2 as illustrated in Fig. 4A, a pair of the right and left third circuit patterns P3 (P3a and P3b) are formed to have a substantial U shape on the second film F2, in a formation matching with the first-direction extending portion 66 and the second-direction extending portions 67a and 67b, as illustrated in Fig. 9A. Also, a configuration, in which the respective contact portions X3 formed on both end portions of the respective third circuit patterns P3a and P3b form a pair of pressure-sensitive switch units SW1 and SW2 in the first left-side detection region α1 and the second left-side detection region α2, and a pair of pressure-sensitive switch units SW3 and SW4 in the first right-side detection region β1 and the second right-side detection region β2, respectively, may be employed. In this manner, the membrane switch can be configured to enter the ON state, only in the case where the pressure-sensitive switch units SW arranged in the two detection regions (α1 and α2, or β1 and β2), respectively, which are adjacent in the frontward-rearward direction of the seat, simultaneously enter the conduction state.
- In addition, similarly in the membrane switch 10B having the first circuit pattern P1 and the second circuit pattern P2 as illustrated in Fig. 5A, a pair of the right and left third circuit patterns P3 (P3a and P3b) are formed to have a substantial U shape on the second film F2, as illustrated in Fig. 9B. The respective contact portions X3 facing the contact portions X1 and X2 added on the base end sides of the first branched wiring portions 63 and the second branched wiring portions 64 of the first circuit pattern P1 and the second circuit pattern P2 may be provided in the third circuit patterns P3a and P3b, respectively.
- Further, in the membrane switch 10C having the first circuit pattern P1 and the second circuit pattern P2 as illustrated in Fig. 6A, a pair of the right and left third circuit patterns P3 (P3a and P3b) are formed to have a substantial E shape on the second film F2, in a formation of matching with the three second-direction extending portions 67a to 67c, as illustrated in Fig. 9C. Then, a configuration, in which each of the contact portions X3 formed on front end portions of the respective third circuit patterns P3a and P3b forms each of the pressure-sensitive switch units SW1, SW2, and SW5 paired in the first left-side detection region α1 to the third left-side detection region α3, and the pressure-sensitive switch units SW3, SW4, and SW6 paired in the first right-side detection region β1 to the third right-side detection region β3, may be employed.
- In addition, in the membrane switch 10D having the first circuit pattern P1 and the second circuit pattern P2 as illustrated in Fig. 7A, four third circuit patterns P3 (P3a to P3d) extending along the respective second-direction extending portions 67a to 67d are formed on the second film F2, as illustrated in Fig. 9D. Then, a configuration, in which each of the contact portions X3 formed on both end portions of each of the third circuit patterns P3a to P3d forms each of the pressure-sensitive switch units SW1, SW2, SW3, SW4, SW5, SW6, SW7, and SW8 paired in each of the two detection regions (γ1, γ2, δ1, δ2, ε1, ε2, ζ1, and ζ2) which are adjacent in the frontward-rearward direction of the seat, may be employed.

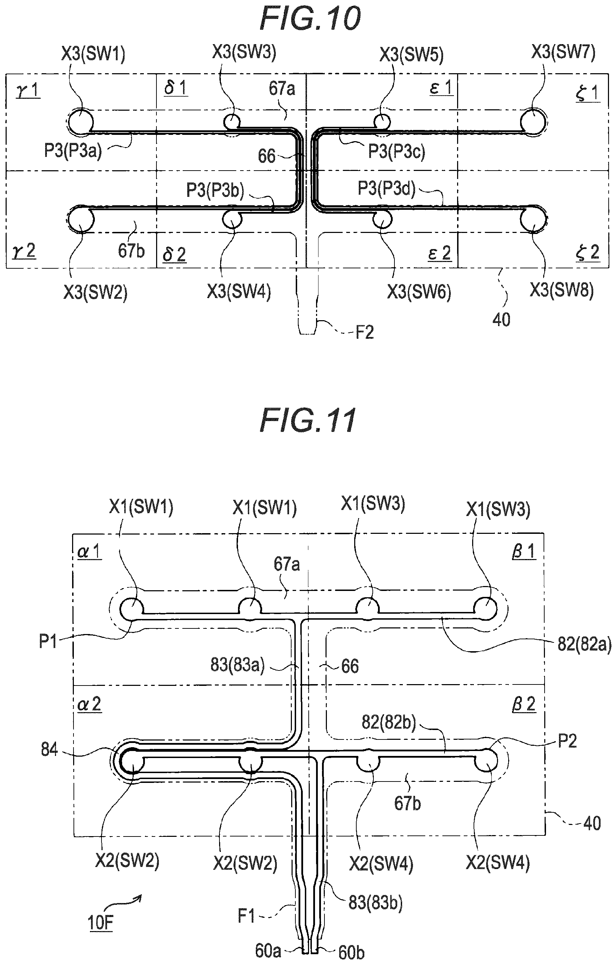

Further, in the membrane switch 10E having the first circuit pattern P1 and the second circuit pattern P2 as illustrated in Fig. 8, the third circuit patterns P3 (P3a to P3d) having a substantial U shape on the second film F2 with two third circuit patterns on the right and left sides, with the first-direction extending portion 66 as an axis of symmetry, as illustrated in Fig. 10. Then, also in this case, a configuration, in which each of the contact portions X3 of each of the third circuit patterns P3a to P3d forms each of the pressure-sensitive switch units SW1, SW2, SW3, SW4, SW5, SW6, SW7, and SW8 paired in each of the two detection regions (γ1, γ2, δ1, δ2, ε1, ε2, ζ1, and ζ2) which are adjacent in the frontward-rearward direction of the seat, may be employed.
- In addition, in a membrane switch 10F having the first circuit pattern P1 and the second circuit pattern P2 as illustrated in Fig. 11, the third circuit patterns P3 formed on the second film F2 may be formed as a pair of the right and left third circuit patterns P3a and P3b having a substantial U shape, as illustrated in Fig. 9B. In this manner, the membrane switch 10F can also be configured to enter the ON state, only in the case where the pressure-sensitive switch units SW arranged in the two detection regions (α1 and α2, or β1 and β2), respectively, which are adjacent in the frontward-rearward direction of the seat, simultaneously enter the conduction state.

Specifically, in the membrane switch 10F, the first circuit pattern P1 has a second-direction wiring portion 82 (82a) extending along the second-direction extending portion 67a constituting the first film F1, and the second circuit pattern P2 has a second-direction wiring portion 82 (82b) extending along the second-direction extending portion 67b constituting the same first film F1. In addition, the first circuit pattern P1 and the second circuit pattern P2 have first-direction wiring portions 83 (83a and 83b), respectively, which diverge from the second-direction wiring portions 82 (82a and 82b) and which extend along the first-direction extending portion 66 of the first film F1. Further, the first circuit pattern P1 has, on the first-direction wiring portion 83a, a detour wiring portion 84 which makes a detour around the second-direction wiring portion 82b of the second circuit pattern P2. Furthermore, the connection terminals 60 (60a and 60b) of the membrane switch 10F are provided on the front end portions of the first-direction wiring portions 83 (83a and 83b). Also, the four contact portions X1 and X2 are formed at regular intervals in each of the second-direction wiring portions 82 (82a and 82b) of the first circuit pattern P1 and the second circuit pattern P2.

In other words, in the membrane switch 10F, the two contact portions X1 provided in the second-direction wiring portion 82a of the first circuit pattern P1 are arranged in each of the first left-side detection region α1 and the first right-side detection region β1 which are set in the seat occupancy detection section 40. In addition, in the membrane switch 10F, the two contact portions X2 provided in the second-direction wiring portion 82b of the second circuit pattern P2 are arranged in each of the second left-side detection region α2 and the second right-side detection region β2 which are set in the seat occupancy detection section 40. In this manner, the membrane switch has a configuration in which at least one of the two pressure-sensitive switch units SW arranged in the respective detection regions enters the conduction state based on the seat load applied to the respective detection regions (α1, α2, β1, and β2).
- Further, in the membrane switch 10F having the first circuit pattern P1 and the second circuit pattern P2 as illustrated in Fig. 11, two of the third circuit patterns P3 (P3a to P3d) having a substantial U shape are formed on the second film F2 on each of the right and left side, with the first-direction extending portion 66 as an axis of symmetry, as illustrated in Fig. 10.

In such a configuration, the seat occupancy detection section 40 formed on the seat occupancy surface S is divided into two portions in the frontward-rearward direction and four portions in the width direction of the seat, as illustrated in Fig. 10. In other words, each of the contact portions X3 formed on both end portions of each of the third circuit patterns P3a to P3d forms each of the pressure-sensitive switch units SW1, SW2, SW3, SW4, SW5, SW6, SW7, and SW8 paired in each of the two detection regions (γ1, γ2, δ1, δ2, ε1, ε2, ζ1, and ζ2) which are adjacent in the frontward-rearward direction of the seat. In this manner, the membrane switch 10F can be configured to enter the ON state, only in the case where the pressure-sensitive switch units SW arranged in the two detection regions which are adjacent in the frontward-rearward direction of the seat, simultaneously enter the conduction state.

Next, effects of the technical ideas which can be understood in the embodiments described above are described.
(a) In the seat occupancy detection device, the third circuit pattern described above has a configuration in which a pair of the contact portions are arranged with respect to the two detection regions adjacent in the frontward-rearward direction of the seat.
(b) In the seat occupancy detection device, the third circuit pattern has a configuration in which a pair of the contact portions are arranged with respect to the two detection regions adjacent in the width direction of the seat.
(c) In the seat occupancy detection device, the third circuit pattern has the plurality of second-direction wiring portions that extend in the second direction intersecting the first direction, and the connection wiring portion that connects the second-direction wiring portions. The contact portions of the third circuit pattern are formed in the second-direction wiring portion, thereby facing the contact portions of the first circuit pattern or the contact portions of the second circuit pattern.
   In this configuration, it is possible to form the third circuit pattern on the second film in the minimum laying-out area such that the membrane switch enters the ON state in the case where the pressure-sensitive switch units arranged in the two detection regions, respectively, which are adjacent in the frontward-rearward direction or in the width direction of the seat, simultaneously enter the conduction state. In addition, the second film can have substantially the same shape as the first film. In this manner, it is possible to achieve improvement of production efficiency.
(d) In the seat occupancy detection device, a plurality of the separate third circuit patterns, in which a pair of the contact portions are arranged with respect to the two detection regions adjacent in the frontward-rearward direction of the seat, are formed on the second film.

In this configuration, the membrane switch can be configured to enter the ON state, only in the case where the pressure-sensitive switch units SW arranged in the two detection regions, respectively, which are adjacent in the frontward-rearward direction of the seat, simultaneously enter the conduction state.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

A seat occupancy detection device (20) includes: a membrane switch (10) that forms a seat occupancy detection section (40) on a seat occupancy surface (S) of a seat cushion (2); and a seat occupancy determination device (50) that determines a seat occupancy state of an occupant with respect to the seat cushion, based on an ON/OFF state of the membrane switch, wherein a plurality of detection regions (α1, α2, β1, β2) are set on the seat occupancy detection section by dividing the seat occupancy detection section in a frontward-rearward direction and in a width direction of a seat, and wherein the membrane switch is configured to enter an ON state in a case where pressure-sensitive switch units (SW, SW1, SW2, SW3, SW4) arranged in two detection regions, respectively, which are adjacent in the frontward-rearward direction of the seat, simultaneously enter a conduction state.

## Claims

1. A seat occupancy detection device (20) comprising:
a membrane switch (10) that forms a seat occupancy detection section (40) on a seat occupancy surface (S) of a seat cushion (2); and
a seat occupancy determination device (50) that determines a seat occupancy state of an occupant with respect to the seat cushion, based on an ON/OFF state of the membrane switch,
wherein a plurality of detection regions (α1, α2, β1, β2) are set on the seat occupancy detection section (40) by dividing the seat occupancy detection section (40) in a frontward-rearward direction and in a width direction of a seat, and
**characterized in that** the membrane switch (10) is configured to enter an ON state in a case where pressure-sensitive switch units (SW, SW1, SW2, SW3, SW4) arranged in two detection regions, respectively, which are adjacent in the frontward-rearward direction of the seat, simultaneously enter a conduction state,
wherein the membrane switch (10) includes
a first film (F1) and a second film (F2) which are laminated with an intermediate film (F0) interposed therebetween,
a first circuit pattern (P1) and a second circuit pattern (P2) which are formed on the first film (F1), and
a third circuit pattern (P3) which is formed on the second film (F2),
wherein the respective pressure-sensitive switch units have a configuration in which respective contact portions (X, X1, X2) of the first circuit pattern (P1) and the second circuit pattern (P2) face respective contact portions (X, X3) of the third circuit pattern (P3) via a communication portion (31) provided in the intermediate film,
wherein the pressure-sensitive switch unit formed by the contact portion of the first circuit pattern (P1) is disposed on one of the two detection regions adjacent in the frontward-rearward direction of the seat, and the pressure-sensitive switch unit formed by the contact portion of the second circuit pattern (P2) is disposed on the other detection region, and
wherein the membrane switch (10) is configured to be with a first connection terminal (60a) provided on one end of the first circuit pattern (P1) and a second connection terminal (60b) provided on one end of the second circuit pattern (P2) as connection portions.

2. The seat occupancy detection device according to claim 1,
wherein the membrane switch (10) has a configuration in which the pressure-sensitive switch unit formed by the contact portion of the first circuit pattern is disposed on one of the two detection regions adjacent in the width direction of the seat, and the pressure-sensitive switch unit formed by the contact portion of the second circuit pattern (P2) is disposed on the other detection region.

3. The seat occupancy detection device according to claim 2,
wherein each of the first circuit pattern (P1) and the second circuit pattern (P2) has a trunk wiring portion (61, 61a, 61b) extending in a first direction and a first branched wiring portion (63, 63a, 63b) and a second branched wiring portion (64, 64a, 64b) which diverge from the trunk wiring portion and extend in directions opposite to each other,
wherein the contact portion is formed in each of the first branched wiring portions and each of the second branched wiring portions,
wherein the respective second branched wiring portions of the first circuit pattern and the second circuit pattern are provided to extend in the same direction as that of the respective first branched wiring portions on the other side, and
wherein detour wiring portions (65, 65a, 65b), which make a detour around the second branched wiring portions that diverge from the trunk wiring portions on the other side, are provided in the trunk wiring portions of the first circuit pattern (P1) and the second circuit pattern (P2) respectively.

4. The seat occupancy detection device according to claim 3,
wherein a plurality of the contact portions are provided in at least one of the first branched wiring portion or the second branched wiring portion.

5. The seat occupancy detection device according to any one of claims 1 to 4,
wherein the third circuit pattern (P3) has a configuration in which a pair of the contact portions are arranged with respect to the two detection regions adjacent in the frontward-rearward direction of the seat.

6. The seat occupancy detection device according to any one of claims 2 to 4,
wherein the third circuit pattern (P3) has a configuration in which a pair of the contact portions are arranged with respect to the two detection regions adjacent in the width direction of the seat.

7. The seat occupancy detection device according to claim 3 or 4,
wherein the third circuit pattern has a plurality of second-direction wiring portions (71a, 71b) that extend in a second direction intersecting the first direction, and a connection wiring portion (72) that connects the second-direction wiring portions, and
wherein the contact portions of the third circuit pattern (P3) are formed in the second-direction wiring portion, thereby facing the contact portions of the first circuit pattern (P1) or the contact portions of the second circuit pattern (P2).

8. The seat occupancy detection device according to any one of claims 1 to 7,
wherein a plurality of the separate third circuit patterns (P3), in which a pair of the contact portions are formed with respect to the two detection regions adjacent in the frontward-rearward direction of the seat, are arranged on the second film.

9. The seat occupancy detection device according to any one of claims 1 to 8,
wherein the membrane switch (10) is configured to enter the ON state in the case where the pressure-sensitive switch units arranged in the two detection regions, respectively, which are adjacent in the width direction of the seat, simultaneously enter the conduction state.

10. The seat occupancy detection device according to any one of claims 1 to 9,
wherein the membrane switch (10) has the plurality of pressure-sensitive switch units configured to be arranged in the same detection region and at least one of the pressure-sensitive switch units enters the conduction state, based on the seat load applied to the detection region.

## Patentansprüche

1. Vorrichtung zur Erfassung der Sitzbelegung (20) mit:
einem Membranschalter (10), der einen Abschnitt zur Erfassung der Sitzbelegung (40) auf einer Sitzbelegungsfläche (S) eines Sitzpolsters (2) bildet; und
einer Vorrichtung zur Bestimmung der Sitzbelegung (50), die einen Sitzbelegungszustand eines Insassen mit Bezug zu dem Sitzpolster basierend auf einem AN/AUS-Zustand des Membranschalters bestimmt,
wobei eine Vielzahl von Erfassungsregionen (α1, α2, β1, β2) auf dem Abschnitt zur Erfassung der Sitzbelegung (40) eingestellt sind, indem der Abschnitt zur Erfassung der Sitzbelegung (40) in eine Vorwärts-Rückwärts-Richtung und in eine Breitenrichtung eines Sitzes geteilt wird, und
**dadurch gekennzeichnet, dass**
der Membranschalter (10) eingerichtet ist, in einen AN-Zustand überzugehen, in einem Fall, in dem druckempfindliche Schalteinheiten (SW, SW1, SW2, SW3, SW4), die jeweils in zwei Erfassungsregionen angeordnet sind, die neben der Vorwärts-Rückwärts-Richtung des Sitzes liegen, gleichzeitig in einen Leitungszustand übergehen,
wobei der Membranschalter (10) umfasst
einen ersten Film (F1) und einen zweiten Film (F2), die mit einem Zwischenfilm (F0) laminiert sind, der dazwischen angeordnet ist,
ein erstes Schaltungsmuster (P1) und ein zweites Schaltungsmuster (P2), die auf dem ersten Film (F1) gebildet sind, und
ein drittes Schaltungsmuster (P3), das auf dem zweiten Film (F2) gebildet ist,
wobei die jeweiligen druckempfindlichen Schalteinheiten eine Konfiguration aufweisen, in der jeweilige Kontaktstücke (X, X1, X2) des ersten Schaltungsmusters (P1) und des zweiten Schaltungsmusters (P2) den jeweiligen Kontaktstücken (X, X3) des dritten Schaltungsmusters (P3) über ein Kommunikationsstück (31) zugewandt sind, das auf dem Zwischenfilm bereitgestellt ist, und
wobei die druckempfindliche Schalteinheit, die durch das Kontaktstück des ersten Schaltungsmusters (P1) gebildet wird, in einer der beiden Erfassungsregionen angeordnet ist, die neben der Vorwärts-Rückwärts-Richtung des Sitzes liegen, und die druckempfindliche Schalteinheit, die durch das Kontaktstück des zweiten Schaltungsmusters (P2) gebildet wird, in der anderen Erfassungsregion angeordnet ist, und
wobei der Membranschalter (10) dazu eingerichtet ist, mit einem ersten Verbindungsanschluss (60a), bereitgestellt an einem Ende des ersten Schaltungsmusters (P1), und einem zweiten Verbindungsanschluss (60b), bereitgestellt an einem Ende des zweiten Schaltungsmusters (P2), als Verbindungsstücke versehen zu sein.

2. Vorrichtung zur Erfassung der Sitzbelegung nach Anspruch 1,
wobei der Membranschalter (10) eine Konfiguration aufweist, in der die druckempfindliche Schalteinheit, die durch das Kontaktstück des ersten Schaltungsmusters (P1) gebildet wird, auf einer der zwei Erfassungsregionen neben der Breitenrichtung des Sitzes angeordnet ist, und die druckempfindliche Schalteinheit, die durch das Kontaktstück des zweiten Schaltungsmusters (P2) gebildet wird, auf der anderen Erfassungsregion angeordnet ist.

3. Vorrichtung zur Erfassung der Sitzbelegung nach Anspruch 2,
wobei jedes von dem ersten Schaltungsmuster (P1) und dem zweiten Schaltungsmuster (P2) ein Kofferraumverdrahtungsstück (61, 61a, 61b) aufweist, das sich in eine erste Richtung erstreckt und ein erstes Abzweigverdrahtungsstück (63, 63a, 63b) und ein zweites Abzweigverdrahtungsstück (64, 64a, 64b), die von dem Kofferraumverdrahtungsstück divergieren und sich in entgegengesetzte Richtungen erstrecken,
wobei das Kontaktstück in jedem von den ersten Abzweigverdrahtungsstücken und jedem von den zweiten Abzweigverdrahtungsstücken gebildet wird,
wobei die jeweiligen zweiten Abzweigverdrahtungsstücke des ersten Schaltungsmusters und des zweiten Schaltungsmusters bereitgestellt sind, sich in die gleiche Richtung zu erstrecken, wie die der jeweiligen ersten Abzweigverdrahtungsstücke auf der anderen Seite, und
wobei Umwegverdrahtungsstücke (65, 65a, 65b), die einen Umweg um die zweiten Abzweigverdrahtungsstücke machen, die von den Kofferraumverdrahtungsstücken auf der anderen Seite divergieren, in den Kofferraumverdrahtungsstücken des ersten Schaltungsmusters (P1) oder des zweiten Schaltungsmusters (P2) bereitgestellt sind.

4. Vorrichtung zur Erfassung der Sitzbelegung nach Anspruch 3,
wobei eine Vielzahl der Kontaktstücke in zumindest einem von dem ersten Abzweigverdrahtungsstück oder dem zweiten Abzweigverdrahtungsstück bereitgestellt ist.

5. Vorrichtung zur Erfassung der Sitzbelegung nach einem der Ansprüche 1 bis 4,
wobei das dritte Schaltungsmuster (P3) eine Konfiguration aufweist, in der ein Paar der Kontaktstücke mit Bezug zu den zwei Erfassungsregionen nebenliegend zu der Vorwärts-Rückwärts-Richtung des Sitzes angeordnet ist.

6. Vorrichtung zur Erfassung der Sitzbelegung nach einem der Ansprüche 2 bis 4,
wobei das dritte Schaltungsmuster (P3) eine Konfiguration aufweist, in der ein Paar der Kontaktstücke mit Bezug zu den zwei Erfassungsregionen nebenliegend zu der Breitenrichtung des Sitzes angeordnet ist.

7. Vorrichtung zur Erfassung der Sitzbelegung nach Anspruch 3 oder 4,
wobei das dritte Schaltungsmuster eine Vielzahl der zweiten Richtungs-Verdrahtungsstücke (71a, 71b) aufweist, die sich in eine zweite Richtung erstrecken, die sich mit der ersten Richtung kreuzt, und ein Verbindungs-Verdrahtungsstück (72), das die zweiten Richtungs-Verdrahtungsstücke verbindet, und
wobei die Kontaktstücke des dritten Schaltungsmusters (P3) in dem zweiten Richtungs-Verdrahtungsstück gebildet werden, wobei sie dabei den Kontaktstücken des ersten Schaltungsmusters (P1) oder den Kontaktstücken des zweiten Schaltungsmusters (P2) zugewandt sind.

8. Vorrichtung zur Erfassung der Sitzbelegung nach einem der Ansprüche 1 bis 7,
wobei eine Vielzahl der separaten dritten Schaltungsmuster (P3) auf dem zweiten Film angeordnet ist, in der ein Paar der Kontaktstücke mit Bezug zu den zwei Erfassungsregionen nebenliegend zu der Vorwärts-Rückwärts-Richtung des Sitzes gebildet wird.

9. Vorrichtung zur Erfassung der Sitzbelegung nach einem der Ansprüche 1 bis 8,
wobei der Membranschalter (10) dazu eingerichtet ist, in den AN-Zustand überzugehen, in dem Fall, in dem die druckempfindlichen Schalteinheiten, die jeweils in den zwei Erfassungsregionen angeordnet sind, die sich neben der Breitenrichtung des Sitzes befinden, gleichzeitig den Leitungszustand eingehen.

10. Vorrichtung zur Erfassung der Sitzbelegung nach einem der Ansprüche 1 bis 9,
wobei der Membranschalter (10) die Vielzahl der druckempfindlichen Schalteinheiten aufweist, die dazu eingerichtet sind, in der gleichen Erfassungsregion angeordnet zu sein, und bei zumindest einer der druckempfindlichen Schalteinheiten basierend auf der Sitzlast, die auf die Erfassungsregion angewendet wird, den Leitungszustand eingeht.

## Revendications

1. Dispositif de détection d'occupation de siège (20) comprenant :
un commutateur à membrane (10) qui forme une section de détection d'occupation de siège (40) sur une surface d'occupation de siège (S) d'un coussin de siège (2) ; et
un dispositif de détermination d'occupation de siège (50) qui détermine un état d'occupation de siège d'un occupant par rapport au coussin de siège, sur la base d'un état MARCHE/ARRÊT du commutateur à membrane,
dans lequel une pluralité de régions de détection (α1, α2, β1, β2) sont établies sur la section de détection d'occupation de siège (40) en divisant la section de détection d'occupation de siège (40) dans une direction avant-arrière et dans une direction de la largeur d'un siège, et
**caractérisé en ce que** le commutateur à membrane (10) est configuré pour entrer dans un état MARCHE dans un cas où des unités de commutation sensibles à la pression (SW, SW1, SW2, SW3, SW4) agencées dans deux régions de détection, respectivement, qui sont adjacentes dans la direction avant-arrière du siège, entrent simultanément dans un état de conduction,
dans lequel le commutateur à membrane (10) comporte
un premier film (F1) et un deuxième film (F2) qui sont stratifiés avec un film intermédiaire (F0) interposé entre eux,
un premier motif de circuit (P1) et un deuxième motif de circuit (P2) qui sont formés sur le premier film (F1) et
un troisième motif de circuit (P3) qui est formé sur le deuxième film (F2),
dans lequel les unités de commutation sensibles à la pression respectives ont une configuration dans laquelle des parties de contact respectives (X, X1, X2) du premier motif de circuit (P1) et du deuxième motif de circuit (P2) font face à des parties de contact respectives (X, X3) du troisième motif de circuit (P3) via une partie de communication (31) prévue dans le film intermédiaire,
dans lequel l'unité de commutation sensible à la pression formée par la partie de contact du premier motif de circuit (P1) est disposée sur l'une des deux régions de détection adjacentes dans la direction avant-arrière du siège, et l'unité de commutation sensible à la pression formée par la partie de contact du deuxième motif de circuit (P2) est disposée sur l'autre région de détection, et
dans lequel le commutateur à membrane (10) est configuré pour être avec une première borne de connexion (60a) prévue sur une extrémité du premier motif de circuit (P1) et une deuxième borne de connexion (60b) prévue sur une extrémité du deuxième motif de circuit (P2) comme parties de connexion.

2. Dispositif de détection d'occupation de siège selon la revendication 1, dans lequel le commutateur à membrane (10) a une configuration dans laquelle l'unité de commutation sensible à la pression formée par la partie de contact du premier motif de circuit est disposée sur l'une des deux régions de détection adjacentes dans la direction de la largeur du siège, et l'unité de commutation sensible à la pression formée par la partie de contact du deuxième motif de circuit (P2) est disposée sur l'autre région de détection.

3. Dispositif de détection d'occupation de siège selon la revendication 2,
dans lequel chacun du premier motif de circuit (P1) et du deuxième motif de circuit (P2) a une partie de câblage centrale (61, 61a, 61b) s'étendant dans une première direction et une première partie de câblage ramifiée (63, 63a, 63b) et une deuxième partie de câblage ramifiée (64, 64a, 64b) qui divergent à partir de la partie de câblage centrale et qui s'étendent dans des directions opposées l'une à l'autre,
dans lequel la partie de contact est formée chacune des premières parties de câblage ramifiées et chacune des deuxièmes parties de câblage ramifiées,
dans lequel les deuxièmes parties de câblage ramifiées respectives du premier motif de circuit et du deuxième motif de circuit sont prévues pour s'étendre dans la même direction que celle des premières parties de câblage ramifiées respectives de l'autre côté, et
dans lequel des parties de câblage de déviation (65, 65a, 65b), qui contournent des deuxièmes parties de câblage ramifiées qui divergent à partir des parties de câblage centrales de l'autre côté, sont prévues dans les parties de câblage centrales du premier motif de circuit (P1) et du deuxième motif de circuit (P2), respectivement.

4. Dispositif de détection d'occupation de siège selon la revendication 3,
dans lequel une pluralité des parties de contact sont prévues dans au moins l'une parmi la première partie de câblage ramifiée ou la deuxième partie de câblage ramifiée.

5. Dispositif de détection d'occupation de siège selon l'une quelconque des revendications 1 à 4,
dans lequel le troisième motif de circuit (P3) a une configuration dans laquelle une paire des parties de contact sont agencées par rapport aux deux régions de détection adjacentes dans la direction avant-arrière du siège.

6. Dispositif de détection d'occupation de siège selon l'une quelconque des revendications 2 à 4,
dans lequel le troisième motif de circuit (P3) a une configuration dans laquelle une paire des parties de contact sont agencées par rapport aux deux régions de détection adjacentes dans la direction de la largeur du siège.

7. Dispositif de détection d'occupation de siège selon la revendication 3 ou 4,
dans lequel le troisième motif de circuit a une pluralité de parties de câblage de deuxième-direction (71a, 71b) qui s'étendent dans une deuxième direction coupant la première direction, et une partie de câblage de connexion (72) qui relie les parties de câblage de deuxième-direction, et
dans lequel les parties de contact du troisième motif de circuit (P3) sont formées dans la partie de câblage de deuxième-direction, faisant face ainsi aux parties de contact du premier motif de circuit (P1) ou aux parties de contact du deuxième motif de circuit (P2).

8. Dispositif de détection d'occupation de siège selon l'une quelconque des revendications 1 à 7,
dans lequel une pluralité des troisièmes motifs de circuit séparés (P3) dans laquelle une paire des parties de contact sont formées par rapport aux deux régions de détection adjacentes dans la direction avant-arrière du siège, sont agencés sur le deuxième film.

9. Dispositif de détection d'occupation de siège selon l'une quelconque des revendications 1 à 8,
dans lequel le commutateur à membrane (10) est configuré pour enter dans l'état MARCHE dans le cas où les unités de commutation sensibles à la pression agencées dans les deux régions de détection, respectivement, qui sont adjacentes dans la direction de la largeur du siège, entrent simultanément dans l'état de conduction.

10. Dispositif de détection d'occupation de siège selon l'une quelconque des revendications 1 à 9,
dans lequel le commutateur à membrane (10) a la pluralité d'unités de commutation sensibles à la pression qui sont configurées pour être agencées dans la même région de détection et au moins l'une des unités de commutation sensibles à la pression qui entre dans l'état de conduction, sur la base de la charge du siège appliquée à la région de détection.
